# EUROPEAN PATENT SPECIFICATION

(11) **EP 0 987 129 B1**
(45) Date of publication and mention of the grant of the patent: **04.08.2004**
(21) Application number: 99307359.2
(22) Date of filing: 16.09.1999
(51) Int. Cl.: B60C 9/20, B60C 11/04, B60C 11/01, B60C 9/18, B60C 3/04

(54) **Pneumatic radial tires**
Radiale Luftreifen
Bandages pneumatiques radiaux

(30) Priority: 17.09.1998 JP 26322498; 17.09.1998 JP 26322698; 11.12.1998 JP 35237598; 11.12.1998 JP 35237698; 24.12.1998 JP 36650798
(43) Date of publication of application: 22.03.2000
(73) Proprietor: Bridgestone Corporation, Tokyo (JP)
(72) Inventor: Okamoto, Yoichi, Kawagoe City, Saitama Pref. (JP); Kohno Yoshihide, Kunitachi City, Tokyo (JP)
(74) Representative: Whalley, Kevin

(56) References cited:
- EP-A- 0 785 095
- FR-A- 2 068 234
- GB-A- 2 072 590
- US-A- 3 131 744
- US-A- 3 656 533
- US-A- 3 757 844
- US-A- 3 977 455
- US-A- 4 194 548
- US-A- 4 865 101

## Description

This invention relates to a pneumatic radial tire, and more particularly to a heavy duty pneumatic radial tire for use in heavy vehicles such as trucks, buses and the like, which has a belt comprised of three rubberized cord layers for attaining weight reduction and improving cut resistance in a tread portion, particularly cut resistance of a belt to enhance durability during running on bad roads while maintaining separation resistance of the belt, cornering performance and the like at a level equal to or more than those of the conventional tire having a belt comprised of four rubberized cord layers.

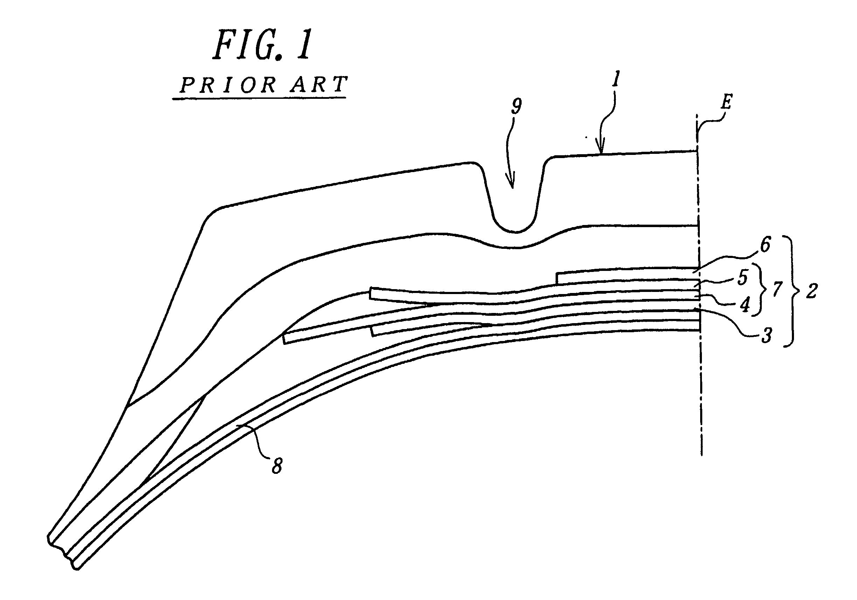

In this type of the tire, particularly a pneumatic radial tire for use in a heavy vehicle such as a truck, bus or the like, as shown in Fig. 1, a belt 2 in a tread portion 1 is generally comprised of four rubberized cord layers 3, 4, 5, 6, wherein cords in a first cord layer 3 located nearest to a carcass 8 are arranged at a relatively large inclination angle with respect to a plane parallel to an equatorial plane E of the tire, and cords of a second cord layer 4 and a third cord layer 5 are arranged so as to cross with each other with respect to the above plane to form a cross cord layer 7 composed of the second and third cord layers 4, 5, and cords in a fourth cord layer 6 are arranged in the same extending direction as the third cord layer 5 at substantially the same inclination angle as in the third cord layer 5. Moreover, steel cords are used in each of the cord layers 3 to 6 constituting the belt 2.

When the tire having the above belt 2 is run on a bad road, e.g. a bad road scattered with broken stones, small rocks and the like under loading, the tread portion 1 treads on sharp corner edge portions of the broken stones, small rocks or the like and is occasionally subjected to cut damage reaching to the belt 2. In order to avoid the cut damage of the belt as far as possible, it is proposed that the fourth cord layer 6 plays a role as a protection layer for holding the cut damage of the belt at the fourth cord layer 5 as an outermost cord layer.

On the other hand, it is strongly demanded to reduce the weight of the heavy duty pneumatic radial tire likewise pneumatic radial tires for passenger cars and the like. For this purpose, there is a proposal that the belt occupying a considerable part of the tire weight is rendered from the above four-layer structure into a three-layer structure. In a belt having three cord layers, cords in a first cord layer located nearest to a carcass are arranged at a relatively large inclination angle with respect to the above plane, and a second cord layer and a third cord layer form a cross cord layer and cords of the cross cord layer are arranged at a relatively small inclination angle with respect to the plane.

As a tire having such a three-layer structure, for example, a tire disclosed in JP-A-7-186613 has a belt comprised of three breakers (corresponding to the cord layer), wherein a tenacity of a third breaker counted from the carcass per unit width is made larger than those of first and second breakers under the knowledge that the tenacity of the third breaker is most lacking. Thus, when the tread portion of the tire rides on foreign matter such as broken stones, small rocks and the like, cord breakage only occurs in the third breaker at most, whereby damage such as tire burst and the like can cheaply and effectively be prevented.

As a result of actual investigations on the tire disclosed in the above publication, however, it has been confirmed that since the cross cord angle between the second and third breakers constituting the cross cord layer in the belt is relatively small, when the tire is inflated under a given inner pressure, a large tension is applied to the cords of each of the second and third breakers, so that even if the cord tenacity of the third breaker per unit width (concretely tensile strength) is increased with considerable effort, the cord breakage through the foreign matter such as broken stones, small rocks or the like can not sufficiently be controlled. This is because the cords subjected to the large tension largely decrease energy enough to counter to input of cut damage.

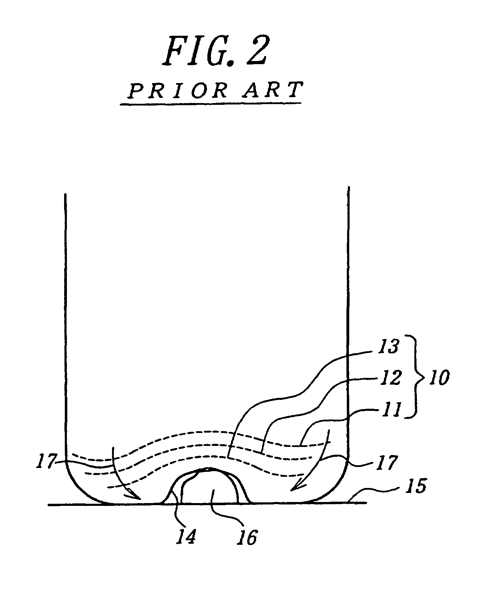

As shown by a partial front view of the above tire (three cord layers 11, 12, 13 constituting a belt 10) in Fig. 2, when the tread portion 14 of the tire run under loading rides on a certain size of a foreign matter 16 such as a broken stone or rock, a bending force is applied to the belt 10 in a direction of an arrow 17 and hence a buckling phenomenon is apt to be locally caused in the cords of an outermost cord layer 13. As the buckling is repeatedly caused, the fatigue of the cord is promoted to finally cause breaking of the cord. Also, if the running of the tire is continued at such a state, the other cord layers 11, 12 in the belt 10 are damaged and finally separation failure of the belt 10 is caused and hence it is impossible to reuse the tire.

Furthermore, among grooves formed in a tread rubber for the formation of a tread pattern, when a sharp corner edge portion of the broken stone or small rock bites into a circumferential groove extending in the circumferential direction of the tread portion at each side region of the tread portion in the riding of the tire on the foreign matter, since a thickness of the tread rubber from the bottom of such a circumferential groove to the belt is thin, the above sharp comer edge portion relatively easily passes through the tread rubber and arrives at the belt and hence the belt is easily cut by the sharp corner edge portion of the broken stone or the like. Therefore, the cut damage of the belt in such a circumferential groove should be solved.

In general, the pneumatic radial tires for use in a heavy vehicle such as a truck, bus or the like are repeatedly subjected to recapping in accordance with user's demands for cost saving and resource saving. For this end, it is required to cause no significant cut damage or cord breakage in the belt 10 and no large separation failure around the belt 10 as a tire suitable for recapping.

Moreover, in the conventional tire shown in Fig. 1, the first cord layer 3 containing cords arranged at a relatively large inclination angle is an innermost cord layer, while the inclination angle of the cord in the second to fourth cord layers 4, 5, 6 with respect to the equatorial plane E is small, so that when a top of a rib formed in a mold for the formation of a circumferential groove 9 bites into an uncured tread rubber of a tread portion in an uncured tire during the vulcanization building of the uncured tire, since the bending rigidity of a laminate of uncured cord layers is small, the bending resistance of the laminate to the entrance of the rib top of the mold is insufficient and hence the portion of the belt 2 just beneath the circumferential groove 9 indicates concave form in the resulting product tire as shown in Fig. 1. Such a concave form in the cord layers 5, 6 results in a problem that the recapping operation is considerably degraded because the rib top is hardly peeled off from the concave form.

Particularly, in the tire having the belt of three-layer structure as shown in Fig. 2, the bending resistance (i.e. rigidity) of the belt as a laminate is smaller than that of the conventional tire having the belt of four-layer structure as shown in Fig. 1, and the degree of the concave form in the cord layers 12, 13 becomes larger than that of the conventional tire. In the recapping of the tire, therefore, it is required that the cut damage is limited to an extremely small level as far as possible, and cord breakage is hardly caused, and separation at the end portion of the belt is limited to a slight cracking level, and the recapping operation is good. However, these requirements are not satisfied in the conventionally proposed tires having the belt of three-layer structure at all.

Attention is also drawn to the disclosure of FR-A-2068234.

It is, therefore, an object of the invention to provide a long-life pneumatic radial tire rendering a belt into a structure of three rubberized cord layers for obtaining weight reduction and maintaining performances required for the tire such as separation resistance of belt, cornering performance and the like at a level equal to or more than those of the conventional tire having a belt comprised of four rubberized cord layers, and capable of simultaneously and largely improving cut resistance of the belt as a whole including cut resistance in a circumferential groove of a tread pattern during running on bad roads and fatigue resistance of cords in an outermost cord layer constituting the belt.

In is another object of the invention to facilitate peeling-off of a top of a rib in a mold for the formation of a circumferential groove from a concave cord layer constituting the belt in the recapping of the tire to improve the recapping operation.

According to the invention, there is provided a pneumatic radial tire comprising a radial carcass comprised of at least one rubberized cord ply extending between a pair of bead cores embedded in a pair of bead portions and reinforcing a pair of sidewall portions and a tread portion, a belt reinforcing the tread portion at an outside of the carcass and comprised of three rubberized cord layers, an innermost cord layer and a middle cord layer among these cord layers being a cross cord layer wherein cords of the layers are crossed with each other with respect to an equatorial plane of the tire, and one or more circumferential grooves provided in at least each side region of the tread portion, wherein the cords of each of the innermost cord layer and the middle cord layer have an inclination angle of 10-25° with respect to the equatorial plane, and cords of an outermost cord layer have an inclination angle of 45-115° with respect to the equatorial plane as measured in the same direction as the cords of the middle cord layer, and the outermost cord layer has a width extending toward an end of the tread portion over an outermost groove edge of an outermost circumferential groove in a widthwise direction of the tread portion.

In the invention, a coating rubber for the cords of the outermost cord layer has a compression modulus of not less than 200 kgf/cm². Thus, the resistance to buckling fatigue in the cord of the outermost cord layer is improved.

In a preferable embodiment of the invention, the outermost cord layer has a width covering both widthwise ends of the middle cord layer, preferably a width corresponding to 1.0-1.2 times the width of the middle cord layer. Thus, the separation resistance at the end portion of the belt, particularly cord-crossed end portion causing the concentration of shearing strain is more improved.

In another preferable embodiment of the invention, a rubber gauge between the cord at an end portion of the middle cord layer and the cord of the outermost cord layer adjacent thereto is not less than 0.15 times a rubber gauge between the cord at the end portion of the middle cord layer and the cord of the innermost cord layer adjacent thereto. Thus, the above improvement of the separation resistance is more enhanced.

In a further preferable embodiment of the invention, an end portion of at least one of the innermost cord layer and the middle cord layer is provided with an sheet-shaped end cover rubber enveloping such an end portion, and at least one surface of inner and outer surfaces of the cord layer end portion provided with the end cover rubber is a wavy surface forming a mountain part at a cord existing position and a valley part at a position between adjoining cords, and a difference of height between the mountain part and the valley part is within a range of 0.05-0.25 mm. Thus, the separation resistance at the end portion of the cross cord layer is more advantageously attained.

In a still further preferable embodiment of the invention, at least one of the innermost cord layer and the middle cord layer is provided with a rubber layer joined to a widthwise end face of the cord layer over the full periphery of the cord layer, and the rubber layer has a width of 0.05-5.00 mm.

In the invention, when a tread surface width of the tread portion is divided into four equal parts, two equal parts sandwiching the equatorial plane of the tire indicate the central region of the tread portion and the remaining two equal parts located outside the central region indicate both side regions of the tread portion. Also, the cross cord layer indicates a lamination structure of adjoining cord layers wherein the cords of these cord layers are arranged in different directions with respect to the equatorial plane of the tire (upward to the right and upward to the left). Furthermore, steel cords are preferably used in the cord ply of the carcass and each cord layer of the belt.

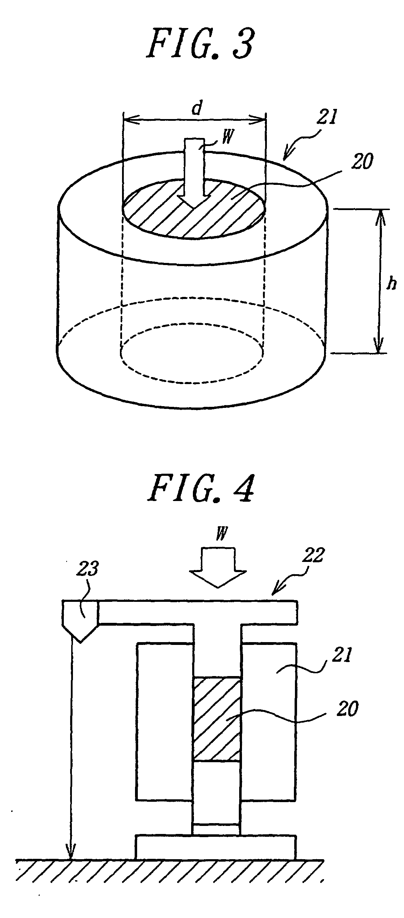

As the compression modulus of the coating rubber is used a value calculated according to the following method. That is, a rubber specimen 20 is closely filled in a metal jig 21 or a steel jig having a columnar hollow portion with a diameter d of 14 mm and a height h of 28 mm as shown in Fig. 3, and then the jig 21 is set in a compression testing machine 22 as shown in Fig. 4. Thereafter, a load W is applied to upper and lower faces of the rubber specimen 20 at a rate of 0.6 mm/min, during which a displacement of the rubber specimen 20 is measured by means of a laser displacement meter 23. Then, the compression modulus is calculated from a relation of the measured displacement to the load W.

The invention will be further described with reference to the accompanying drawings, wherein:
Fig. 1 is a diagrammatic left-half section view of a main part of a conventional tire;
Fig. 2 is a diagrammatic view illustrating a deformed state of a belt having a three-layer structure in a conventional tire when the tire rides on a large foreign matter;
Fig. 3 is a perspective view of a jig used for the measurement of compression modulus of rubber according to the invention;
Fig. 4 is a front view of a compression testing machine fitted with the jig shown in Fig. 3;
Fig. 5 is a perspective view partly cutaway of a part of a tread portion in a first embodiment of the pneumatic radial tire according to the invention;
Fig. 6 is a partially developed plan view of the tread portion in the tire of Fig. 5;
Fig. 7 is a graph showing a relation between inclination angle of cord in an outermost cord layer and cornering power of tire;
Fig. 8 is a partially developed plan view of another tread portion in the tire of Fig. 5;
Fig. 9 is a perspective view of an end portion of a cross cord layer in the belt of the tire shown in Fig. 8;
Fig. 10 is a diagrammatic enlarged section view of the end portion of the cross cord layer shown in Fig. 9; and
Fig. 11 is a perspective view of an end portion of another cross cord layer in the belt of the tire shown in Fig. 8.

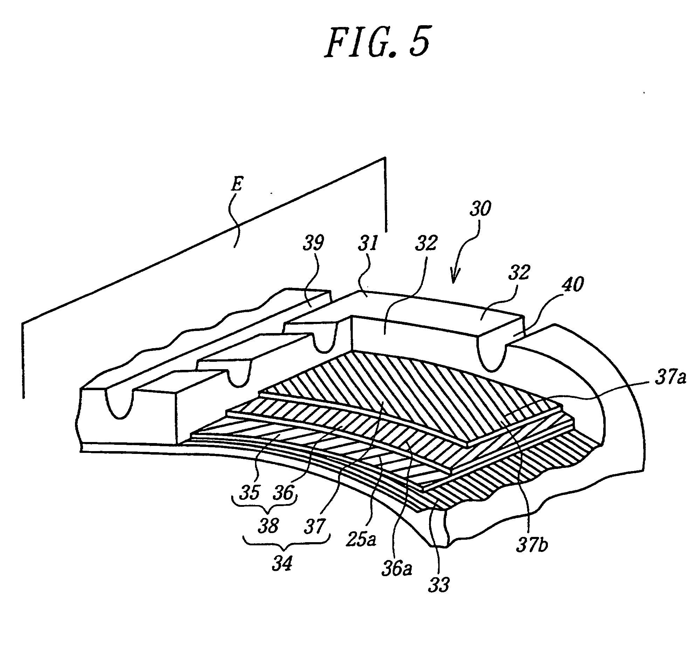

In Fig. 5 is shown a first embodiment of the heavy duty pneumatic radial tire according to the invention. This tire 30 comprises a pair of bead portions (not shown), a pair of sidewall portions (not shown) and a tread portion 31 extending between the pair of the sidewall portions and provided on its ground contact side with a tread rubber 32. The tire 30 also comprises a radial carcass 33 extending between a pair of bead cores (not shown) embedded in the bead portions to reinforce the pair of the bead portions and the pair of the sidewall portions and the tread portion and comprised of one or more rubberized cord plies, one cord ply in the illustrated embodiment, and a belt 34 arranged on an outer circumference of the carcass 33 to reinforce the tread portion 31.

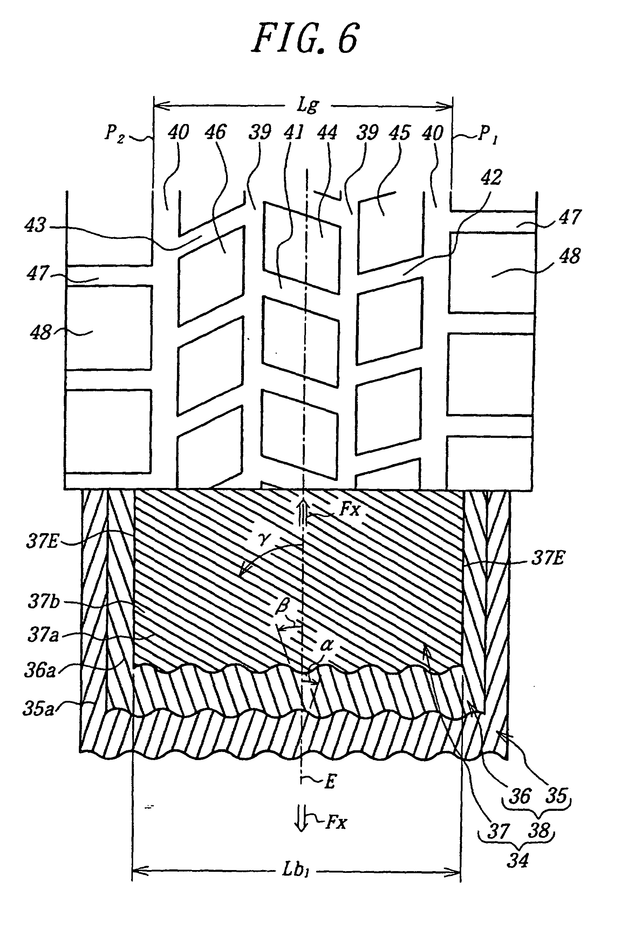

Referring to Figs. 5 and 6, the belt 34 is comprised of three rubberized cord layers 35, 36, 37, wherein cords 35a, 36a of each of an innermost cord layer 35 nearest to the carcass 33 and a middle cord layer 36 are crossed with each other with respect to an equatorial plane E of the tire and the innermost cord layer 35 and the middle cord layer 36 form a cross cord layer 38. The cords 35a of the innermost cord layer 35 and the cords 36a of the middle cord layer 36 are arranged at an inclination angle (α, β) of 10-25°, preferably 15-22°, with respect to the equatorial plane E, respectively. On the other hand, cords 37a of an outermost cord layer 37 are arranged at an inclination angle (γ) of 45-115°, preferably 50-100°, with respect to the equatorial plane E as measured in the same direction as the inclination angle β of the cord 36a of the middle cord layer 36. Also, the cord 37a in the outermost cord layer 37 is covered with a coating rubber having a compression modulus of not less than 200 kgf/cm².

In the tread pattern of this tire 30 shown in Fig. 2, the central region of the tread portion 31 is provided with rows of blocks 44, 45, 46 defined by four circumferential grooves 39, 40 extending straightforward in the circumferential direction and a plurality of lateral grooves 41, 42, 43 extending between the mutual circumferential grooves 39, 39 and between the circumferential grooves 39 and 40 and opening to the respective circumfer-ential grooves, which grooves being formed in the tread rubber 32, and each of both side regions of the tread portion is provided with a row of blocks 48 defined by the circumferential groove 40 and a plurality of lateral grooves 47 opening thereto.

Although the tread pattern shown in Fig. 2 is a block pattern of forming the blocks over the full region of the tread portion 31, the invention may take a rib pattern wherein ribs are formed over the full region of the tread portion only by plural circumferential grooves or a block-rib pattern of combining rib rows and block rows in the tread portion. Moreover, the circumferential grooves 39, 40 in the illustrated embodiment are straight grooves, but may be zigzag grooves.

In this embodiment, the outermost cord layer 37 has a width extending toward an end of the tread portion 31 over an outermost groove edge of an outermost circumferential groove among the circumferential grooves located in both side regions of the tread portion, the circumferential groove 40 in the illustrated embodiment in a widthwise direction of the tread portion. In the embodiment of Fig. 6, a width Lb₁ of the outermost cord layer 37 is larger than a distance Lg between planes P₁, P₂ parallel to the equatorial plane E passing through the outermost groove edges of the circumferential grooves 40 located at both side regions of the tread portion. In other words, the width end 37E of the outermost cord layer 37 always locates outward from the plane P₁, P₂ in the widthwise direction of the tire.

As previously mentioned, the cords 35a of the innermost cord layer 35 and the cords 36a of the middle cord layer 36 are arranged at the inclination angle (α, β) of 10-25°, preferably 15-22°, with respect to the equatorial plane E, while the cords 37a of the outermost cord layer 37 are arranged at the inclination angle (γ) of 45-115°, preferably 50-100°, with respect to the equatorial plane E as measured in the same direction as in the cord 36a of the middle cord layer 36, whereby circumferential tension created in the belt 34 of the tread portion 31 when the tire 30 is inflated under an inner pressure as shown by an arrow Fx in Fig. 6 is mainly borne by the cords 35a and 36a of the innermost cord layer 35 and the middle cord layer 36 forming the cross cord layer 38 at a small inclination angle with respect to the equatorial plane E, so that tension to be borne by the outermost cord layer 37 can largely be decreased.

Thus, when the tread portion 31 of the tire 30 during running under loading rides on a foreign matter such as a broken stone, small rock or the like having a sharp corner edge, even if the corner edge arrives at the belt 34 through the tread rubber 33, the cords 37a of the outermost cord layer 37 are hardly cut and the durability of the tire 30 is improved based on such a cut resistance.

Also, the belt 34 tends to project outward in the radial direction of the tire 30 by tension Fx created in the belt 34 when the tire 30 is inflated under the inner pressure and hence the belt 34 intends to contract inward in the widthwise direction thereof as a whole, so that the cords 35a, 36a and 37a of the cord layers 35, 36, 37 in the belt 34 are intended to change into a direction of decreasing the inclination angles α, β, γ, respectively. In the belt 34 having the above structure, however, the inclination angle γ of the cord 37a of the outermost cord layer 37 is considerably larger than those α, β of the cords 35a, 36a of the innermost cord layer 35 and the middle cord layer 36, so that the degree of decreasing the inclination angle in the cord 37a is very small as compared with those of the cords 35a, 36a and hence the outermost cord layer 37 indicates a tendency hardly causing the contraction in the widthwise direction.

This means that the outermost cord layer 37 acts to control the contraction of the cross cord layer 38 in the widthwise direction because the cords 37a of the outermost cord layer 37 act as a prop to the cross cord layer 38. As a result, the cross cord layer 38 having the controlled widthwise contraction increases the circumferential rigidity of the tread portion 31, and hence the cornering power (hereinafter abbreviated as CP) can be improved even in the tire 30 having the belt 34 of the three-layer structure to develop a cornering performance equal to or more than that of the conventional tire having a belt of four-layer structure. Furthermore, the increase of the circumferential rigidity in the cross cord layer 38 largely contributes to control the growth of tire size in the inflation of the tire under the inner pressure.

Moreover, the inclination angles α, β of the cords 35a and 36a in the innermost cord layer 35 and the middle cord layer 36 are approximately equal to each other with respect to the equatorial plane E and the planes P₁, P₂ parallel to the equatorial plane from a viewpoint that tension is equally borne by the cords 35a and 36a. The reason why the inclination angles α, β of the cords 35a and 36a are restricted to a range of 10-25° is due to the fact that when each of the inclination angles α, β is less than 10°, interlaminar shearing strain produced between the innermost cord layer 35 and an end portion of the middle cord layer 36 becomes too large and separation failure is apt to be caused at such an end portion, while when the inclination angle α, β exceeds 25°, the effect of controlling the widthwise contraction of the outermost cord layer 37 can not sufficiently be developed due to the tension Fx acting to the belt 34 in the tire 30 inflated under the inner pressure and hence the circumferential rigidity of the cross cord layer 38 considerably lowers to bring about the degradation of CP property and the increase of tire size growth.

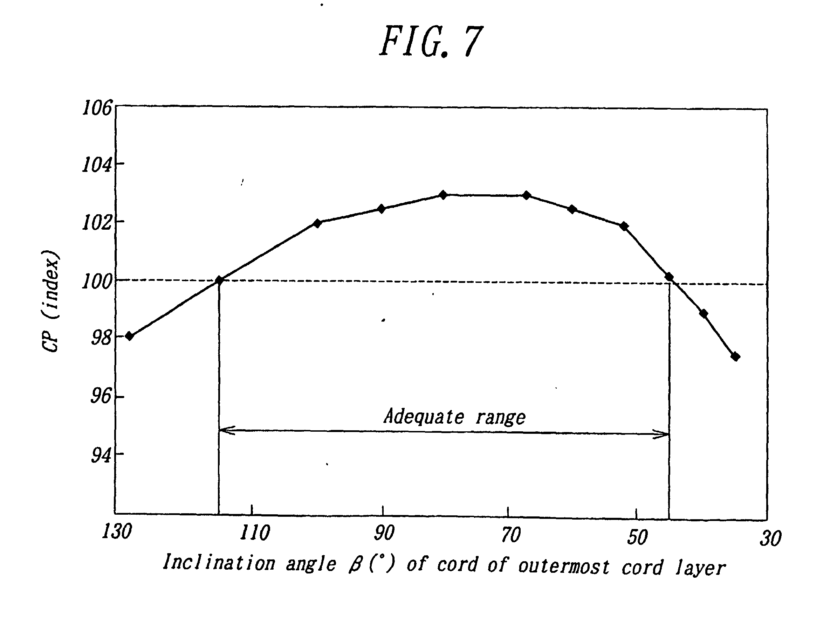

In Fig. 7 is shown a comparison of CP property between the tire 30 having the belt 34 and the conventional tire having the belt of four-layer structure. The CP property of the tire 30 is measured by changing the inclination angle γ of the cord 37a of the outermost cord layer 37 and represented by an index on the basis that the conventional tire is 100. As seen from Fig. 7, the adequate inclination angle γ indicating the index value of not less than 100 (i.e. CP property is equal to or more than that of the conventional tire) is within a range of 45-115°. When the inclination angle γ is less than 45° or exceeds 115°, the CP property is degraded as compared with that of the conventional tire, so that the inclination angle γ should be within the adequate range of 45-115°. From this fact, it is proved that the cords 37a of the outermost cord layer 37 act as a prop to the widthwise contraction of the cross cord layer 38 and enhance the circumferential rigidity of the cross cord layer 38.

Also, when the tire 30 is run on a road surface scattered with relatively large foreign matter such as broken stones and rocks and rides on such a foreign matter, as previously mentioned with reference to Fig. 2, the outermost cord layer 37 in the belt 34 is forcedly subjected to a bending deformation at a large curvature and hence a large compression force is locally applied to the outermost cord layer 37 to cause buckling in the cords 37a thereof. In the invention, however, rubber having a compression modulus of not less than 200 kgf/cm² is used as a coating rubber 37b for the cord 37a in the outermost cord layer 37, whereby the compression resistance of the coating rubber 37b is increased, so that it is possible to prevent the buckling deformation of the cord 37a in the outermost cord layer 37. As a result, even when the tire frequently rides on relatively large foreign matter such as a broken stone or rock, the occurrence of cord breakage due to the buckling fatigue of the cord 37a in the outermost cord layer 37 can be prevented. When the compression modulus of the coating rubber is less than 200 kgf/cm², the above effect is insufficient.

Furthermore, when the sharp corner edge of the foreign matter such as a broken stone or rock scattered on the road surface bites into the bottom of the circumferential groove 39, 40 during the running of the tire, since the outermost cord layer 37 has a width extending toward the end of the tread portion 31 over the outermost groove edges of the outermost circumferential grooves 40 existing in both side regions of the tread in the widthwise direction, even if the corner edge of the foreign matter arrives at the belt 34 through the thin tread rubber 32 located beneath the groove bottom, many cords 37a of the outermost cord layer 37 are always existent beneath the thin tread rubber and provide a sufficient resistance to cut input as mentioned below.

The reason why many cords 37a of the outermost cord layer 37 are existent ahead the corner edge of the foreign matter which bites into the circumferential groove 40 along the groove bottom thereof is due to the fact that when the circumferential groove 40 is a straight groove, an angle defined between the groove bottom and the cord 37a of the outermost cord layer 37 is not less than 45°. In this connection, if the circumferential groove 40 is a zigzag groove, the difference between inclination angle of the zigzag groove with respect to the plane P₁, P₂ parallel to the equatorial plane E and inclination angle of the cord 37a of the outermost cord layer 37 is preferably not less than 20°. If such an inclination angle difference is less than 20°, the number of the cords 37a receiving the entrance of the corner edge of the foreign matter becomes too small.

In any case, the cord 37a of the outermost cord layer 37 receiving the cut input of the sharp corner edge of the foreign matter has slight in the tension bearing ratio and has a sufficient resistance against the cut, so that the entrance of the corner edge can be stopped by the outermost cord layer 37 to prevent the breakage of the cords 36a in the middle cord layer 36. For this end, the outermost cord layer 37 is required to have a width extending outward over the outermost groove edge of the outermost circumferential groove 40 in the widthwise direction of the tire. If the circumferential groove 40 is a zigzag groove, it is sufficient that the outermost cord layer 37 has a width extending outward over a top of the groove edge at the outermost position of the mountain-shaped groove in the widthwise direction.

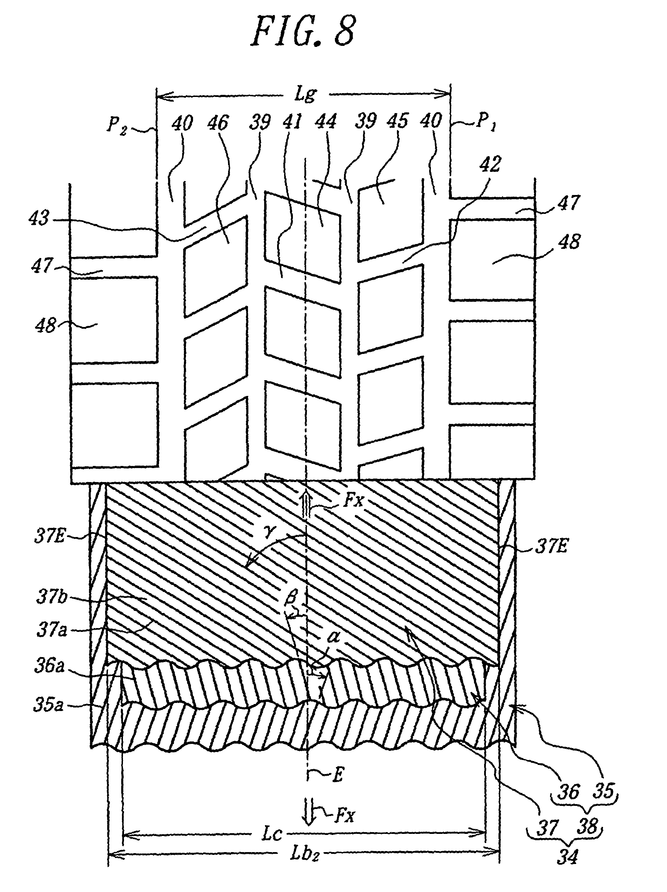

The width of the outermost cord layer 37 (developed width Lb₁) is narrower than the width of the middle cord layer 36 as shown in Fig. 6. In order to more ensure the cut resistance and further improve separation resistance between end portion of the innermost cord layer 35 (forming the end portion of the cross cord layer 38) and the middle cord layer 36, as shown in Fig. 8ₓ the width of the outermost cord layer 37 (developed width Lb₂) in the belt 34 is made wider than the width of the middle cord layer 36 (developed width Lc) so as to cover both widthwise ends of the middle cord layer 36 with the outermost cord layer 37.

In the end zone of the middle cord layer 37 shown in Figs. 5 and 6, only the cross cord layer 38 is subjected to shearing deformation and hence shearing strain concentrates between the end portion of the middle cord layer 36 and the innermost cord layer 35 just beneath the tread portion 31 of the tire 30 under loading and separation failure is apt to be caused in the cross cord layer 38 at the end zone of the middle cord layer 36.

On the contrary, when the width of the outermost cord layer 37 is made wider than the width of the middle cord layer 36 as shown in Fig. 8, a part of the shearing rigidity of the cross cord layer 38 is taken over between the end portion of the middle cord layer 36 and the end portion of the outermost cord layer 37 at the end zone of the middle cord layer 36, so that the interlaminar shearing strain in the cross cord layer 38 at the end zone of the middle cord layer 36 is decreased and the occurrence of separation failure is more prevented.

In the tire shown in Fig. 8, the width of the outermost cord layer 37 is preferably within a range of 1.0-1.2 times the width of the middle cord layer 36. As the width of the outermost cord layer 37 becomes wider, tensile strain at the end portion of the outermost cord layer 37 just beneath the tire under loading in the rotating axial direction of the tire increases, and if the width of the outermost cord layer 37 exceeds 1.2 times the width of the middle cord layer 36, the tensile strain at the end portion of the outermost cord layer 37 becomes excessively large and hence separation failure is apt to be caused at the end of the outermost cord layer 37.

On the other hand, when the width of the outermost cord layer 37 is within a range of 1.0-1.2 times the width of the middle cord layer 36, the shearing strain between the end portion of the middle cord layer 36 and the outermost cord layer 37 naturally increases as compared with the case that the width of the outermost cord layer 37 is less than the width of the middle cord layer 36. For this end, it is advantageous to control such an interlaminar sharing strain to not more than interlaminar sharing strain of the cross cord layer 38, so that a rubber gauge between the cord at the end portion of the middle cord layer 36 and the cord of the outermost cord layer 37 adjacent to such a cord of the middle cord layer is made to be not less than 0.15 times a rubber gauge between the cord at the end portion of the middle cord layer 36 and the cord of the innermost cord layer 35 adjacent to such a cord of the middle cord layer. When the rubber gauge is less than 0.15 times, the shearing strain between the end portion of the middle cord layer 36 and the outermost cord layer becomes too large and separation failure is apt to be caused between such cord layers.

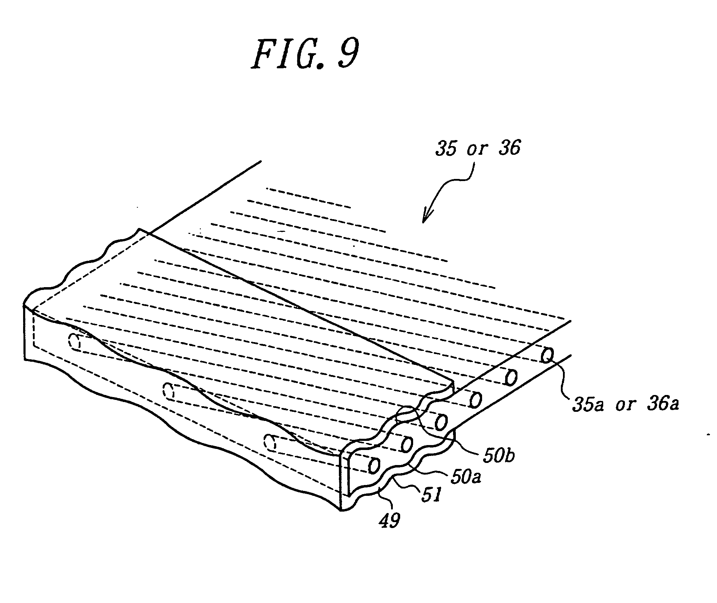

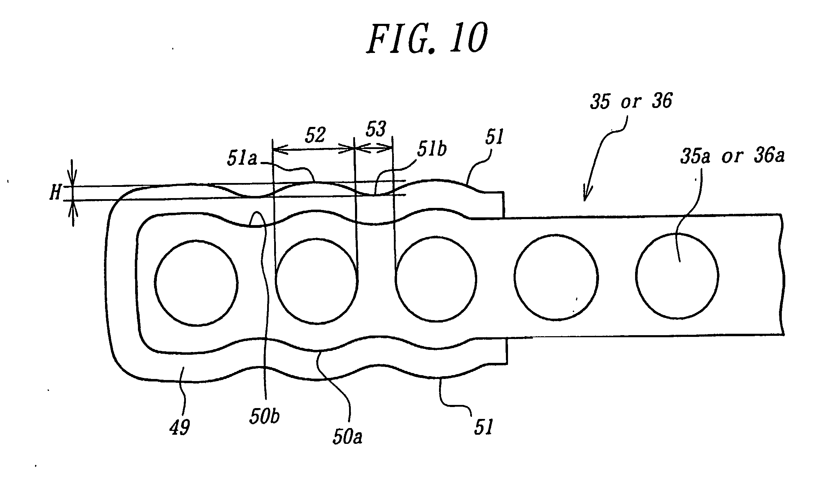

In order to satisfy the relation of the above rubber gauge between the cords and mitigate the interlaminar shearing stress of the cross cord layer 38, as shown in Figs. 9 and 10 a sheet-shaped end cover rubber 49 is arranged at a widthwise end portion of at least one of the innermost cord layer 35 and the middle cord layer 36 so as to cover the end portion of the cord layer. At least one surface of inner surface 50a and outer surface 50b in the radial direction of the tire at the end portion of the innermost cord layer 35 or the middle cord layer 36 provided with the end cover rubber 49, the inner and outer surfaces 50a, 50b in the illustrated embodiment,are a wavy surface forming a mountain part at a cord existing position (35a, 36a) and a valley part at a position between adjoining cords (35a, 36a) of the layer. As a result, the surface 51 of the end cover rubber 49 has a wavy surface consisting of mountain parts 51a and valley parts 51b. The mountain part 51a corresponds to the cord existing position 52 (35a, 36a) and the valley part 51b corresponds to the position 53 between the adjoining cords (35a, 36a). A difference of height H between the mountain part 51a and the valley part 51b is within a range of 0.05-0.25 mm. Such a height difference H largely contributes to control the occurrence of separation between the innermost cord layer 35 and the end portion of the middle cord layer 36 constituting the cross cord layer 38.

The reason why the height difference H between the mountain part 51a and the valley part 51b in the end cover rubber 49 is restricted to a range of 0.05-0.25 mm is due to the fact that when the height difference H is less than 0.05 mm, the effect of controlling the occurrence of separation at the end portion of the cross cord layer 38 is not obtained in practice, while when it exceeds 0.25 mm, a greater amount of air is enveloped in recess portions corresponding to valley parts 51b of the tire 30 during the laying of cord layer members for the belt in the building of an uncured tire and a portion enveloping air is not adhered in the vulcanization building of the uncured tire and hence separation is caused from such a portion.

The wavy form on the inner surface 50a and the outer surface 50b of the innermost cord layer 35 or the middle cord layer 36 and the surface 51 of the end cover rubber 49 is carried out by a method wherein at least one surface of at least an end portion of an uncured rubberized cord layer member cut into a given length is pushed by the same roll as comb roll aligning steel cords in a given arranging direction when a continuous cord layer member corresponding to cord layers 35, 36 for the cross cord layer 38 of the belt 34 is manufactured by calendar rolls, or by thinning rubber gauge of uncured coating rubber for the cords 35a, 36a. In the latter case, the rubber gauge is set considering the fact that if the rubber gauge of the coating rubber is too thin, the cords 35a, 36a are easily exposed at the production stage of uncured members.

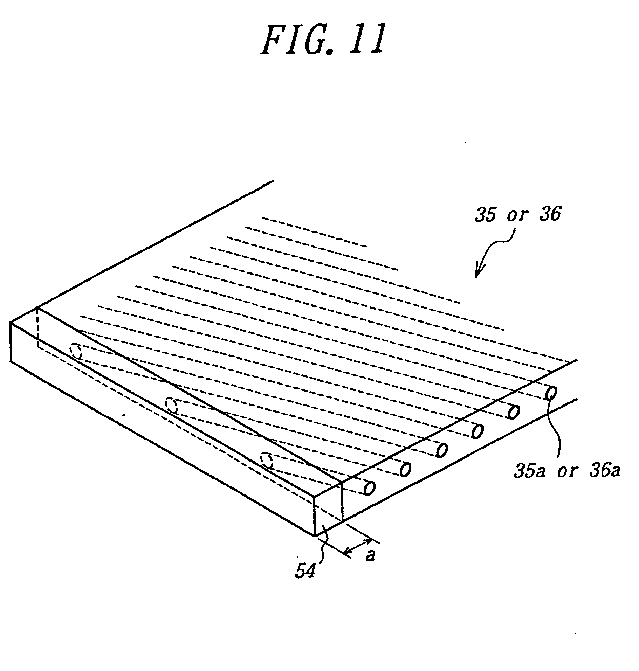

As shown in Fig. 11, a rubber layer 54 is joined to a widthwise end face of at least one of the innermost cord layer 35 and the middle cord layer 36 over the full periphery of the cord layer instead of the end cover rubber 49. The rubber layer 54 can prevent the projection of ends of the cords 35a, 36a of the innermost cord layer 35 and the middle cord layer 36 into the tread rubber 32 and contributes to improve the separation resistance at the end portion of the cross cord layer 38. In this case, the width a of the rubber layer 54 is within a range of 0.05-5.00 mm.

When the width a of the rubber layer 54 is less than 0.05 mm, the effect of controlling the occurrence of separation failure becomes too small, while when the width a exceeds 5.00 mm, if the uncured cord layer members for the innermost cord layer 35 and the middle cord layer 36 are fed onto a building drum from their feeding devices in the building of the uncured tire, the uncured rubber member for the rubber layer 54 hangs down or turns up and there is caused a problem of damaging the operability.

In the case of arranging the rubber layer 54, the end cover rubber 49 may not be arranged, but the rubber layer 54 and the end cover rubber 49 may be used together. In the latter case, the surface 51 of the end cover rubber 49 is not necessarily rendered into the wavy surface 51a, 51b. Moreover, the rubber layer 54 preferably has the same rubber composition as coating rubbers for the cord in the innermost cord layer 35 and the cord in the middle cord layer 36 from a viewpoint of productivity. Thus, the ends of the cords 35a of the innermost cord layer 35 and the cords 36a of the middle cord layer 36 can be protected by the rubber layer 54 having the same rubber composition, which is advantageous in the improvement of the separation resistance. Also, the end cover rubber 49 preferably has a 100% modulus larger than that of the cord coating rubber.

The following examples are given in illustration of the invention and are not intended as limitations thereof.

### Examples 1-14. Comparative Examples 1-6

There are provided radial tires for trucks and buses to be tested having a tire size of 11R22.5 and a structure as shown in Figs. 5, 6 and 8-11, wherein a belt 34 has a three-layer structure comprised of innermost cord layer 35, middle cord layer 36 and outermost cord layer 37 provided that the innermost cord layer 35 and the middle cord layer 36 form a cross cord layer 38. All cords 35a, 36a, 37a of the cord layers 35, 36, 37 are made of steel cords of 1×0.34+6×0.34 and an end count in each cord layer is 18.0 cords/50 mm.

The number of cord layers in the belt 34, cord inclination angle in each cord layer (α, β, γ) and compression modulus (kgf/cm²) of coating rubber for the cord 37a of the outermost cord layer 37 are shown in Table 1. For comparison with a conventional tire and comparative tires, the inclination angles α, β, γ(°) are represented in Table 1 as a cord inclination angle of a cord layer attached by 1B, 2B, 3B, 4B (not existing in the examples) from a carcass 33 in this order. Also, symbol R attached before the value of the inclination angle means that the cords are arranged upward to the right, and symbol L means that the cords are arranged upward to the left.

The carcass 33 is comprised of one rubberized radial carcass ply containing steel cords of (3+9+15)×0.175. The other construction of the tire is according to custom. In order to evaluate the tires of Examples 1-14, there are provided a tire of a conventional example having the same structure as in the above example except that the belt is comprised of four cord layers as shown in Fig. 1, and tires of Comparative Examples 1-6 wherein at least one of the inclination angles of the cord layers in the belt and the compression modulus of the coating rubber 37b for the outermost cord layer 37 is outside the range defined in the invention.

With respect to the tires of Examples 1-14, conventional tire and tires of Comparative Examples 1-6, cut test for the belt, cord breakage test for the outermost cord layer, durability test (test for separation resistance of the cross cord layer) and test for cornering property through the measurement of CP are carried out as mentioned below to obtain results as shown in Table 1.

### A. Cut test of belt;

The test tire rendered into a so-called stone bitten state by biting a steel filler having a tip with an angle of 90° into a block 44 nearest to the equatorial plane E of the tire is inflated under an inner pressure of 7.5 kgf/cm² and run under a load of 2750 kgf/tire over a distance of 10,000 km. Thereafter, the tire is dissected to examine the cord cut breakage of the outermost cord layer. The durability is evaluated by the presence or absence of cord cut breakage.

### B. Cord breakage test of outermost cord layer;

After a semi-sphere having a radius of 30 mm is fixed onto a drum surface of a drum testing machine, the test tire inflated under an inner pressure of 7.5 kgf/cm² is run on the drum under a load of 2750 kgf over a distance of 10,000 km so as to locate the semi-sphere to substantially a center of the tread portion. Thereafter, the tire is dissected to examine cord breakage in the outermost cord layer. The durability is evaluated by the presence or absence of cord breakage.

### C. Durability test for cross cord layer;

The test tire inflated under an inner pressure of 7.5 _{kgf}/cm² is run under a load of 2750 kgf at a state of applying a lateral force of 0.3 g (gravity acceleration) over a distance of 1,000 km. Thereafter, the tire is dissected to measure crack length produced at the end of the middle cord layer. The belt durability is evaluated by a reciprocal of the crack length and represented by an index on the basis that the control tire is 100, wherein the larger the index value, the better the property.

### D. Test for cornering property;

The test tire mounted onto a rim (rim size: 8.25) is run on a drum testing machine under conditions that the inner pressure is 7.5 kgf/cm² and the load is 2750 kgf, during which a slip angle is increased every 1° within a range of 1-4° and CP is calculated from cornering force measured at each of the slip angles. The cornering property is evaluated by an average value of CP and represented by an index on the basis that the conventional tire is 100, wherein the larger the index value, the better the property.

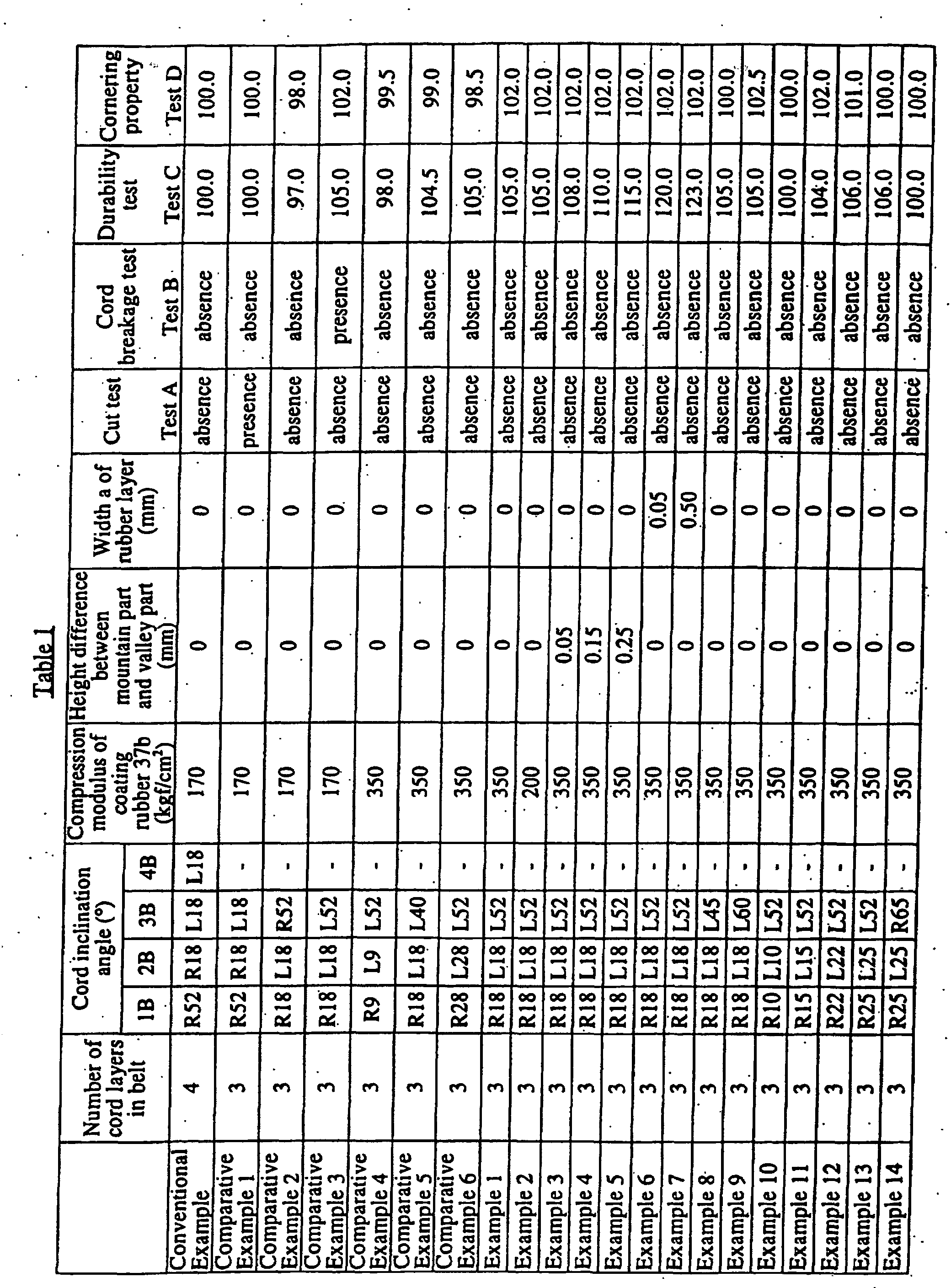

As seen from the results of Table 1, the tires of Examples 1-14 maintain a sound state without causing cut breakage or cord breakage in the cords 37a of the outermost cord layer 37 in the tests A and B, and have a durability and CP property equal to or more than those of the conventional tire in the tests C and D. On the contrary, the tires of Comparative Examples 1-6 are poor in at least one of the cord breakage or cord cut breakage of the outermost cord layer and the cornering property as compared with the conventional tire.

### Examples 15-18, Compasative Examples 7-8

There are provided tires of Examples 15-18 having the same tire size and structure as in Example 1 and a tread pattern shown in Fig. 6 wherein a distance between outermost groove edges of straight circumferential grooves 40 arranged in both side regions of the tread portion 31 in the widthwise direction (distance Lg in Fig. 6) is 100 mm. For the evaluation of the tires of Examples 15-18, there are provided the same conventional tire as used for comparison with Example 1 and tires of Comparative Examples 7 and 8 having the same structure as in Example 1 except that the width of the outermost cord layer is outside the range defined in the invention. With respect to these tires, the cord inclination angles and widths of cord layers 1B-4B are shown in Table 2.

The cut resistance at the bottom of the outermost circumferential groove 40 is measured with respect to these tires by the following test method to obtain results as shown in Table 2.

After the test tire is mounted onto a rim having a rim size of 8.25 and inflated under an inner pressure of 7.5 kgf/cm2, an edge of a cutting steel jig having an equilateral triangle with a side of 60 mm at section and a thickness of 40 mm is pushed down along the groove bottom of the circumferential groove 40 at a rate of 1 mm/sec in a direction perpendicular to the rotating axis of the tire until the jig completely passes through the tire, during which a pushing quantity (displacement) D (cm) of the cutting jig ranging from a time of the edge contacting with the groove bottom to a time of passing through the tire and a maximum pushing force F (kgf) at the passage through the tire are detected and recorded. The cut resistance of the belt 34 at the bottom of the circumferential groove 40 is evaluated by a cut energy of DxF/2 and represented by an index on the basis that the conventional tire is 100, wherein the larger the index value, the better the property.

**Table 2**

| | Number of cord layers in belt | Cord inclination angle (°) | | | | Width of cord layer (mm) | | | | Cut energy (index) |
|---|---|---|---|---|---|---|---|---|---|---|
| | | 1B | 2B | 3B | 4B | 1B | 2B | 3B | 4B | |
| Conventional Example | 4 | R52 | R18 | L18 | L18 | 150 | 180 | 150 | 80 | 100 |
| Comparative Example 7 | 3 | R18 | L18 | L52 | - | 180 | 150 | 90 | - | 92 |
| Comparative Example 8 | 3 | R18 | L18 | L52 | - | 180 | 150 | 100 | - | 94 |
| Example 15 | 3 | R18 | L18 | L52 | - | 180 | 150 | 110 | - | 120 |
| Example 16 | 3 | R18 | L18 | L52 | - | 180 | 150 | 130 | - | 117 |
| Example 17 | 3 | R18 | L18 | L52 | - | 180 | 150 | 150 | - | 115 |
| Example 18 | 3 | R18 | L18 | L52 | - | 180 | 150 | 170 | - | 115 |

As seen from the results of Table 2, the tires of Examples 15-18 considerably improve the cut resistance of the belt 34 at the bottom of the circumferential groove 40 as compared with the conventional tire having the belt of four-layer structure, while the tires of Comparative Examples 7-8 largely degrade the cut resistance of the belt 34 at the bottom of the circumferential groove 40 as compared with the conventional tire.

### Examples 19-20, Comparative Examples 9-11

There are provided tires of Examples 19-20 having the same tire size as in Example 1 and a tread pattern as shown in Fig. 8. For the evaluation of the tires of Examples 19-20, there are provided the same conventional tire as used for comparison with Example 1 and tires of Comparative Examples 9-11 having the same structure as in Example 19 except that at least one of a ratio of rubber gauge G₂₃ (mm) between steel cord at an end of middle cord layer 36 and steel cord of outermost cord layer 37 adjacent thereto to rubber gauge G₁₂ (mm) between steel cord at an end of middle cord layer 36 and steel cord of innermost cord layer 35 adjacent thereto and width of outermost cord layer 37 is varied.

With respect to these tires, cord inclination angles and widths of cord layers 1B-4B and ratio of width W₃₇ of outermost cord layer 37 to width W₃₆ of middle cord layer 36 are shown in Table 3.

The same Test C as described in Example 1 is carried out with respect to the tires of Examples 19-20, conventional tire and tires of Comparative Examples 9-11 to measure crack length from each end of the middle cord layer 36 and outermost cord layer 37. The belt durability is evaluated by a reciprocal of the measured crack length and represented by an index on the basis that the crack length inside the end of the cord layer 3B in the conventional tire is 100 wherein the larger the index value, the better the property. The measured results are shown in Table 3. Moreover, the word "inside" means inside in the radial direction of the tire, and the word "outside" means outside in the radial direction of the tire. In the conventional tire, the results of cord layer 3B is shown in the term 2B, and the result of cord layer 4B is shown in the term 3B.

Furthermore, the same Test C as in Example 1 is continued until the occurrence of separation failure in the belt. Thus, the belt durability or separation resistance is directly evaluated by the running time until the occurrence of troubles and represented by an index on the basis that the running time of the conventional tire is 100 wherein the larger the index value, the better the property. The measured results are shown in Table 3. Also, the position of trouble in the belt is also shown in Table 3.

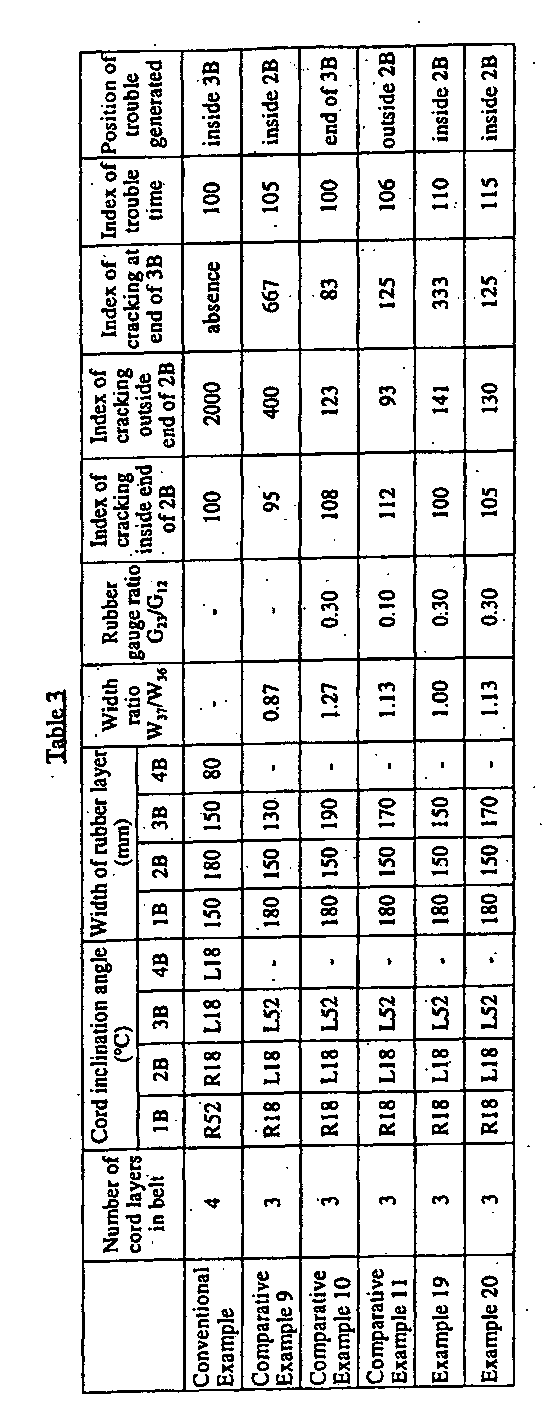

As seen from the results of Table 3, the tire of Comparative Example 9 in which the width of the outermost cord layer is narrower by 20 mm than the width of the middle cord layer is long in the crack length produced from the end of the middle cord layer and causes separation failure at a relatively premature time based on the growth of such a crack, while the tire of Comparative Example 10 in which the width of the outermost cord layer is wider by 40 mm than the width of the middle cord layer is long in the crack length produced from the end of the outermost cord layer and causes separation failure at a relatively premature time based on the growth of such a crack. In the tires of Comparative Examples 9 and 10, the running time until the occurrence of trouble is equal to or slightly higher than that of the conventional tire.

On the other hand, the tire of Comparative Example 11 in which the rubber gauge ratio G₂₃/G₁₂ is too small even if the widths of the outermost cord layer and middle cord layer are rationalized is long in the crack length from the outside end of the middle cord layer and the running time thereof is slightly higher than that of the conventional tire. On the contrary, in the tires of Examples 19-20, the cracks from the ends of the middle cord layer and outermost cord layer are shorter than those of the conventional tire and hence the running time until the occurrence of trouble is considerably longer than that of the conventional tire, which attain a level recognizing the significance in market.

As mentioned above, according to the invention, there can be provided a long-life pneumatic radial tire rendering a belt into a structure of three rubberized cord layers for obtaining weight reduction and maintaining performances required for the tire such as separation resistance of belt, cornering performance and the like at a level equal to or more than those of the conventional tire having a belt comprised of four rubberized cord layers and capable of simultaneously and largely improving cut resistance of the belt as a whole including cut resistance in a circumferential groove of a tread pattern during running on bad roads and fatigue resistance of cords in an outermost cord layer constituting the belt.

## Claims

1. A pneumatic radial tire (30) comprising a radial carcass (33) comprised of at least one rubberized cord ply extending between a pair of bead cores embedded in a pair of bead portions and reinforcing a pair of sidewall portions and a tread portion (31), a belt (34) reinforcing the tread portion at an outside of the carcass and comprised of three rubberized cord layers (35,36,37), an innermost cord layer (35) and a middle cord layer (36) among said cord layers being a cross cord layer (38) wherein cords of the layers are crossed with each other with respect to an equatorial plane (E) of the tire, and one or more circumferential grooves (39,40) provided in at least each side region of the tread portion, wherein the cords (35a,36a) of each of the innermost cord layer (35) and the middle cord layer (36) have an inclination angle of 10-25° with respect to the equatorial plane, and cords (37a) of an outermost cord layer (37) have an inclination angle of 45-115° with respect to the equatorial plane as measured in the same direction as the cords (36a) of the middle cord layer (36), and the outermost cord layer (37) has a width extending toward an end of the tread portion (31) over an outermost groove edge of an outermost circumferential groove (40) in a widthwise direction of the tread portion, and wherein a coating rubber for the cords (37a) of the outermost cord layer (37) has a compression modulus of not less that 200 kgf/cm².

2. A pneumatic radial tire as claimed in claim 1, **characterized in that** the outermost cord layer (37) has a width covering both widthwise ends of the middle cord layer (36).

3. A pneumatic radial tire as claimed in claim 2, **characterized in that** the width of the outermost cord layer (37) corresponds to 1.0-1.2 times the width of the middle cord layer (36).

4. A pneumatic radial tire as claimed in claim 2 or 3, **characterized in that** a rubber gauge between the cord at an end portion of the middle cord layer (36) and the cord of the outermost cord layer (37) adjacent thereto is not less than 0.15 times a rubber gauge between the cord at the end portion of the middle cord layer (36) and the cord of the innermost cord layer (35) adjacent thereto.

5. A pneumatic radial tire as claimed in any of claims 1 to 4, **characterized in that** an end portion of at least one of the innermost cord layer (35) and the middle cord layer (36) is provided with a sheet-shaped end cover rubber (49) enveloping such an end portion, and at least one surface of inner and outer surfaces (50a,50b) of the cord layer end portion provided with the end cover rubber (49) is a wavy surface forming a mountain part (51a) at a cord existing position (52) and a valley part (51b) at a position (53) between adjoining cords, and a difference of height (H) between the mountain part and the valley part is within a range of 0.05-0.25 mm.

6. A pneumatic radial tire as claimed in any of claims 1 to 4, **characterized in that** at least one of the innermost cord layer (35) and the middle cord layer (36) is provided with a rubber layer (54) joined to a widthwise end face of the cord layer over the full periphery of the cord layer, and the rubber layer (54) has a width of 0.05-5.00 mm.

## Patentansprüche

1. Radialer Luftreifen (30), aufweisend eine radiale Karkasse (33), die aus mindestens einer gummigetränkten Cordlage besteht, die sich zwischen zwei in zwei Wulstbereiche eingebetteten Wulstkernen erstreckt, und die zwei Seitenwandbereiche und einen Laufflächenbereich (31) verstärkt, und einen Gürtel (34) auf der Außenseite der Karkasse, der den Laufflächenbereich verstärkt und aus drei gummigetränkten Cordschichten (35, 36, 37) besteht, wobei unter diesen Cordschichten die innere Cordschicht (35) und die mittlere Cordschicht (36) eine schräge Cordschicht (38) sind, deren Cordfäden sich bezüglich der Äquatorebene (E) des Reifens überkreuzen, und eine oder mehr Umfangsrillen (39, 40) in mindestens jedem Seitengebiet des Laufflächenbereichs vorgesehen sind, wobei die Cordfäden (35a, 36a) der inneren Cordschicht (35) und der mittleren Cordschicht (36) einen Neigungswinkel von 10-25° bezüglich der Äquatorebene haben, und die Cordfäden (37a) der äußeren Cordschicht (37) einen Neigungswinkel von 45-115° bezüglich der Äquatorebene haben, gemessen in der gleichen Richtung wie bei den Cordfäden (36a) der mittleren Cordschicht (36), und die äußere Cordschicht (37) eine Breite hat, die sich zu dem Rand des Laufflächenbereichs (31) hin über den äußeren Rillenrand der äußersten Umfangsrille (40) in der Breitenrichtung des Laufflächenbereichs erstreckt, **dadurch gekennzeichnet, daß** der Beschichtungsgummi für die Cordfäden (37a) der äußeren Cordschicht (37) einen Kompressionsmodul von nicht weniger als 200 kp/cm² hat.

2. Radialer Luftreifen wie in Anspruch 1 beansprucht, **dadurch gekennzeichnet, daß** die äußere Cordschicht (37) eine Breite hat, die beide Ränder der mittleren Cordschicht (36) bedeckt.

3. Radialer Luftreifen wie in Anspruch 2 beansprucht, **dadurch gekennzeichnet, daß** die Breite der äußeren Cordschicht (37) der 1,0-1,2-fachen Breite der mittleren Cordschicht (36) entspricht.

4. Radialer Luftreifen wie in Anspruch 2 oder 3 beansprucht, **dadurch gekennzeichnet, daß** die Gummidicke zwischen dem Cord in einem Randbereich der mittleren Cordschicht (36) und dem Cord der daran angrenzenden, äußeren Cordschicht (37) nicht kleiner ist als die 0,15-fache Gummidicke zwischen dem Cord in dem Randbereich der mittleren Cordschicht (36) und dem Cord der daran angrenzenden, inneren Cordschicht (35).

5. Radialer Luftreifen wie in irgendeinem der Ansprüche 1 bis 4 beansprucht, **dadurch gekennzeichnet, daß** der Randbereich von mindestens der inneren Cordschicht (35) oder der mittleren Cordschicht (36) mit einem folienförmigen Randdeckgummi (49) versehen ist, der diesen Randbereich umhüllt, und mindestens die innere oder äußere Oberfläche (50a, 50b) des mit dem Randdeckgummi (49) versehenen Cordschicht-Randbereichs eine wellige Oberfläche ist, die einen Bergteil (51a) bei einer Cordfadenposition (52), und einen Talteil (51b) bei einer Position (53) zwischen benachbarten Cordfäden bildet, und der Höhenunterschied (H) zwischen dem Bergteil und dem Talteil in dem Bereich von 0,05-0,25 mm liegt.

6. Radialer Luftreifen wie in irgendeinem der Ansprüche 1 bis 4 beansprucht, **dadurch gekennzeichnet, daß** mindestens die innere Cordschicht (35) oder die mittlere Cordschicht (36) mit einer Gummischicht (54) versehen ist, die an die Randfläche der Cordschicht über den vollen Umfang der Cordschicht angefügt ist, und die Gummischicht (54) eine Breite von 0,05-5,00 mm hat.

## Revendications

1. Bandage pneumatique radial (30) comprenant une carcasse radiale (33) comprenant au moins une nappe de câblés caoutchoutés s'étendant entre une paire de tringles noyée dans une paire de parties de talon, et renforçant une paire de parties de flancs et une partie de bande de roulement (31), une ceinture (34) renforçant la partie de bande de roulement au niveau de l'extérieur de la carcasse et comprenant trois couches de câblés caoutchoutés (35, 36, 37), une couche de câblés interne extrême (35) et une couche de câblés médiane (36) parmi les couches de câblés constituant une couche de câblés croisés (38), les câblés des couches se croisant mutuellement par rapport à un plan équatorial (E) du bandage pneumatique, et une ou plusieurs rainures circonférentielles (39, 40) agencées dans au moins chaque région latérale de la partie de bande de roulement, les câblés (35a, 36a) de la couche de câblés interne extrême(35) et de la couche de câbles médiane (36) ayant un angle d'inclinaison de 10 à 25° par rapport au plan équatorial; les câblés (37a) de la couche de câblés externe extrême (37) formant un angle d'inclinaison de 45 à 115° par rapport au plan équatorial, mesurée dans la même direction que les câblés (36a) de la couche de câblés médiane (36), la couche de câblés externe extrême (37) ayant une largeur s'étendant vers une extrémité de la partie de bande de roulement (31) au-dessus d'un bord de rainure externe extrême d'une rainure circonférentielle externe extrême (40), dans la direction de la largeur de la partie de bande de roulement, **caractérisé en ce qu'**une gomme de revêtement des câblés (37a) de la couche de câblés externe extrême (37) a un module de compression non inférieur à 200 kgf/cm².

2. Bandage pneumatique radial selon la revendication 1, **caractérisé en ce que** la couche de câblés externes extrême (37) a une largeur recouvrant les deux extrémités dans le sens de la largeur de la couche de câblés médiane (36).

3. Bandage pneumatique radial selon la revendication 2, **caractérisé en ce que** la largeur de la couche de câblés externe extrême (37) représente 1,0 à 1,2 fois la largeur de la couche de câblés médiane (36).

4. Bandage pneumatique radial selon les revendications 2 ou 3, **caractérisé en ce qu'**une épaisseur de la gomme entre les câblés au niveau d'une partie d'extrémité de la couche de câblés médiane (36) et les câblés de la couche de câblés externe extrême (37) adjacente ne représente pas moins de 0,15 fois une épaisseur de gomme entre les câblés au niveau de la partie d'extrémité de la couche de câblés médiane (36) et les câblés de la couche de câblés interne extrême (35) adjacente.

5. Bandage pneumatique radial selon l'une quelconque des revendications 1 à 4, **caractérisé en ce qu'**une partie d'extrémité d'au moins la couche de câblés interne extrême (35) et de la couche de câblés médiane (36) comporte une gomme de recouvrement d'extrémité en forme de feuille (49) entourant cette partie d'extrémité, au moins une surface des surfaces interne et externe (50a, 50b) de la partie d'extrémité de la couche de câblés comportant la gomme de recouvrement d'extrémité (49) étant constituée par une surface ondulée établissant une partie en saillie (51a) au niveau d'une position des câblés (52) et une partie creuse (51b) au niveau d'une position (53) entre les câblés adjacents, une différence de la hauteur (H) entre la partie en saillie et la partie creuse étant comprise dans un intervalle allant de 0,05 à 0,25 mm.

6. Bandage pneumatique radial selon l'une quelconque des revendications 1 à 4, **caractérisé en ce qu'**au moins une couche, la couche de câblés interne extrême (35) ou la couche de câblés médiane (36) comporte une couche de gomme (54) reliée à une face d'extrémité dans le sens de la largeur de la couche de gomme, sur l'ensemble de la périphérie de la couche de câblés, la couche de gomme (54) ayant une largeur comprise enter 0,05 et 5,00 mm.
